# EUROPEAN PATENT SPECIFICATION

(11) **EP 3 290 398 B1**
(45) Date of publication and mention of the grant of the patent: **25.09.2019**
(21) Application number: 16728372.0
(22) Date of filing: 27.04.2016
(51) Int. Cl.: B32B 7/12, B29C 39/10, B32B 29/00, C04B 28/14, C04B 111/00, E04C 2/04, E04C 2/26, B32B 7/02

(54) **LAMINATED CARDBOARD PANEL FOR THE CONSTRUCTION OF PARTITION WALLS AND METHOD FOR PREPARING THE PANEL**
LAMINIERTE GIPSKARTONPLATTE ZUR KONSTRUKTION VON TRENNWÄNDEN UND VERFAHREN ZUR HERSTELLUNG DER PLATTE
PANNEAU DE PLACOPLÂTRE STRATIFIÉ POUR CONSTRUCTION DE CLOISONS ET PROCÉDÉ POUR LA PRODUCTION DU PANNEAU

(30) Priority: 27.04.2015 PT 2015108406
(43) Date of publication of application: 07.03.2018
(73) Proprietor: Categoria & Rigor - Unipessoal LDA, 4150-064 Porto (PT)
(72) Inventor: CERQUEIRA DE SOUSA, Fernando, 4150-064 Porto (PT)
(74) Representative: Pereira da Cruz, Joao
(86) International application number: PCT/IB2016/052388
(87) International publication number: WO 2016/174590

(56) References cited:
- EP-A1- 2 583 954
- WO-A1-2014/198609
- FR-A1- 2 910 508
- US-A1- 2005 241 542
- US-A1- 2012 207 989

## Description

### APPLICATION FIELD

The present invention falls within the building industry. More specifically it falls in the unprecedent design of a laminated cardboard panel (1) with layers of at least two different densities, which is intended to be used in the construction of partition walls with an optimized response if subjected to traction, bending and compression efforts, as well as in the hygrothermal and acoustic insulation inside the buildings.

### BACKGROUND OF THE INVENTION

Constructive system commonly called "Drywall" (dry wall), whose main feature is the use of laminated plasterboards with cardboard (PGL) fixed to a metal support structure, exists in the US market since the end of the 19^{th} century, and was introduced in Europe during the second decade of the 20^{th} century. It is a system which has many advantages comparatively to traditional construction methods - blocks bonded together by means of a wet mortar; some of these advantages are the speed of construction and time savings in preparing the walls for finishing. The product was initially proposed by Augustine Sackett, who registered the invention in 1898.

US 2012/0207989 A1 describes a multilayered cementitious board which comprises two or more layers of cementitious compositions and where each layer can have a different density.

The present invention was developed to overcome some of the limitations of current products of the same type, with respect to the hygrothermal and acoustic insulation, to the resistance to traction, compression and bending efforts and to its density.

At the same time there has been a concern with the environment, since the composite which constitutes the mortar contained in the laminated panel, object of the present invention, incorporates, using an innovative and unprecedented technique, a high percentage of an abundant industrial waste, the pure suberin, which is reduced to powder and subjected to sieving for sorting the particles, in order to produce the composite. Said industrial waste currently has a very limited application, being the most part of it incinerated which results in significant environmental damage.

The mortar designed for the production of the laminated cardboard panel contains the pure suberin pulverized, sieved and sorted as main element, in order to compensate for certain limitations of gypsum as a raw material of the laminated plasterboards (PGL).

Plaster tends to suffer rapid deterioration in saturated moist environment, which often occurs within houses either by infiltration from the outside, or coming from the inside (from WC's and kitchens for instance), while the pure suberin is rot-proof and waterproof, requiring, however, the treatment described in the previous paragraph since if it is used in its natural presentation, i.e. containing wood fibers or other impurities, the desired effect is attenuated or even canceled.

In the past there were, and still are, attempts to integrate laminated or crushed suberin in other materials for preparing mixtures intended to be used in products for the building industry, although two of the most interesting features of this material, the flexibility and impermeability, are also the major obstacles for a good success of these attempts.

The full integration of suberin with other elements in order to form composites can only be achieved if it is pulverized and free of impurities, thereby obtaining a product of great resilience, that is, which quickly resumes its original shape after being subjected to any kind of mechanical stress - compression, traction or bending.

On the other hand, suberin used in its natural form or presentation, laminated, or even crushed, independently of the particle size, can only be agglomerated with other materials by using strong binding elements such as adhesives or rubber, which makes it unattractive for the construction of resistant panels to be used in inside curtain-walls, ceilings or floor slabs, object of the present invention.

Furthermore the powder of pure suberin burns very slowly - which does not happen when it is added to other plant fibers, adhesives or rubber - and provides an effective temporary barrier against fire propagation when combined with plaster, enhancing the plaster capabilities regarding to that function.

In order to enhance the qualities of the panel with respect to the hygrothermal and acoustic insulation functions, the present invention used an absolutely innovative solution consisting in the agglutination of several mortar layers with different densities though involving the same composite elements but in different proportions.

The two outer layers (2), each one representing one third of the total thickness of the panel, containing an higher percentage of plaster, and the inner layer representing the remaining one third with a lower percentage of plaster.

Thus the panel has resistance rates compatible with the performance of similar products currently existing in the market, and has an improved performance by about 40% with respect to the hygrothermal and acoustic insulation requirements compared to the currently available panels, as stated in the reports made in a competent and independent laboratory.

Optionally the laminated cardboard panel (1) may have a metal reinforcement in its core in order to improve its response to traction, bending and compression efforts. The configuration of this internal honeycomb reinforcement frame (3) gives the panel an optimal performance in extreme effort conditions.

### BRIEF DESCRIPTION OF THE DRAWINGS

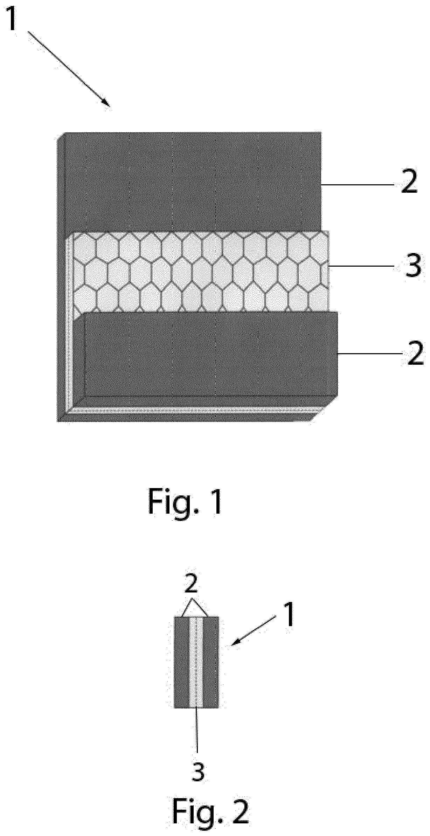

Figure 1 is a perspective view of the laminated cardboard panel (1), in which the two densities composing it are visible and schematically related with the two outer layers (2) and with the inner layer. The metal reinforcement (3) is also represented, with transparency, which can be included or not in the panel produced according to the present invention.
Figure 2 is a side view of the laminated cardboard panel (1) of the present invention.

### DETAILED DESCRIPTION OF THE INVENTION

The present invention discloses a laminated cardboard panel (1) with adjacent layers - which may have a metal reinforcement for structural strengthening thereof - and incorporating a plurality of such inventions bonded to each other due to the utilization of the same mortar in the various products.

The laminated cardboard panel (1) disclosed herein is produced from a mortar containing the following ingredients: powder of pure suberin, gypsum, polyvinyl acetate.

To obtain the pure suberin, which is an industrial waste from the finishing process by abrasion of cork articles, it is necessary to pass it through a fine sieve for screening and subsequent sorting in order to extract the strange elements to the product applicable in the present invention.

This panel is intended to be produced and commercialized for the construction of partition walls with enhanced hygrothermal and acoustic insulating qualities, and to improve the resilience normally associated with related products, evidenced namely in the absorption of moisture and in the loss factor.

It was also considered in this invention the advantage of reducing 20% of the loads related to the curtain-walls inside the buildings, which result was proven and certified by a competent and independent laboratory.

In the production of the laminated cardboard panel (1) the following method is used:
To execute the outer layers (2) of the laminated cardboard panel (1) a composite is prepared with the following ingredients and proportions by weight: 55% of powder of pure suberin, 40% of gypsum, 5% of polyvinyl acetate. During the mixing of this mixture an equal volume of water is added to the amount of composite constituted by said elements and is kneaded to obtain a homogeneous paste.

The mixture obtained according to the method described in the preceding paragraph is then poured into a mold, where the cardboard cover was previously placed and will adhere to the lower outer layer of the panel, and up to one third of the total thickness of the panel.

Immediately thereafter, a second layer with one third of the total thickness of the panel is poured in the mold over the existing layer, this second layer having the same ingredients which were used in the case of the first outer layer but with the following proportions by weight: 70% of powder of pure suberin, 25% of gypsum, 5% of polyvinyl acetate.

At this step of the preparation method, and in those cases where is necessary to produce an reinforced panel, a suitable metal honeycomb reinforcement frame (3) is used - secured to the mold by means of clips inserted therein at half-height of the inner layer of the panel - and the mortar with the density mentioned in the previous paragraph is poured involving the reinforcement and maintaining the flow until the second third of the total thickness of the panel is reached.

After that, and using the same preparation of the first layer, containing the same ingredients and in the same proportions by weight, namely 55% of powder of pure suberin, 40% of gypsum, 5% of polyvinyl acetate, a third layer is poured, also with one third of the total thickness of the panel, over which another cardboard cover is placed forming the upper face of the second outer layer of the panel.

Finally, to extract the excess of water contained in the panel and to consolidate its constituents, the product is passed through a de-humidifier hot chamber.

The present invention constitutes an innovative solution both in the mortar composition and in the design of panels for the construction of partition walls using the "Drywall" method because, besides the fact of adding a high percentage of powder of pure suberin to the gypsum, up to 70% by weight, therefore substantially reducing the density of the mixture while optimizing the response of the final product with respect to their hygrothermal and acoustic insulation qualities, as well as the response regarding the traction and bending efforts, it enhances whenever necessary all the resistances, including those regarding to the compression efforts, thanks to the (optional) presence of a metal reinforcement placed in the panel core during the manufacturing process.

The honeycomb reinforcement frame (3) inside the panel was therefore chosen to provide high resistance to the product without removing its resilience.

The laminated cardboard panel (1) object of the present invention also has an important economic advantage related to the fact of being produced with incorporation of an industrial waste, which is costless or has negligible expenses associated with loading and transport costs.

The ecological benefits of the present invention are obvious as it removes from the environmental contamination cycle an abundant industrial waste which, when treated and applied as referred in this application, provides a 40% improvement in hygrothermal insulation inside buildings, and reduces by the same percentage the energy needed for heating and/or cooling.

### OBJECT OF THE INVENTION

The object of the present invention is a laminated cardboard panel (1) for the construction of partition walls containing several contiguous agglutinated layers formed by a mortar comprising powder of pure suberin, wherein outer layers (2) have the same density and inner layer have different densities.

The laminated cardboard panel (1) comprises a mortar containing 55% of powder of pure suberin for the outer layers (2) and 70% of powder of pure suberin for the inner layer.

The mortar of the laminated cardboard panel (1) also contains 40% of gypsum and 5% of polyvinyl acetate for the outer layers (2).

The mortar of the laminated cardboard panel also contains 25% of gypsum and 5% of polyvinyl acetate for the inner layer.

Preferably, each one of the outer layers (2) object of the present invention represent one third of the total thickness of the laminated cardboard panel.

Preferably, also the inner layer of the laminated cardboard panel (1) of the present invention represent one third of the total thickness thereof.

In another preferred embodiment the inner layer of the laminated cardboard panel (1) for the construction of partition walls contains a metal honeycomb reinforcement frame (3) inside it and at half-height thereof.

Another objective of the present invention refers to the preparation method of the laminated cardboard panel (1), which is substantially defined in that it comprises the following steps:
a) For the outer layers (2), mixing 55% of powder of pure suberin, 40% of calcium sulfate di-hydrate, 5% of polyvinyl acetate in an equal volume of water;
b) Mixing the components of step a) till a homogeneous mixture is obtained;
c) Pouring into a mold, where the cardboard cover that will adhere to the lower outer layer of the panel was previously placed, up to one third of the total thickness of the panel.
d) For the inner layer, mixing 70% of powder of pure suberin, 25% of calcium sulfate di-hydrate, 5% of polyvinyl acetate in an equal volume of water and pouring into the mold over the existing layer, with one third of the total thickness of the panel;
e) Mixing the components of step d) till a homogeneous mixture is obtained;
f) Pouring the third layer with the mixture of step a), also with one third of the total thickness of the panel and placing another cardboard cover over it;
g) Placing the panel in a de-humidifier hot chamber.

In a preferred embodiment, alternatively the metal reinforcement (3) is applied between steps e) and f), which is fixed in the mold by means of clips inserted therein at half-height of the inner layer of the panel, and subsequently pouring the mixture of step d) involving the reinforcement (3) up to the second third of the total thickness of the panel is reached.

The above percentages were determined on a weight basis.

As will be apparent to an expert, various minor alterations are possible, which however should be included within the scope of the present invention limited by the scope of the following claims.

## Claims

1. Laminated cardboard panel (1) for the construction of partition walls, containing at least three adjacent mortar layers including powder of pure suberin, wherein the outer layers (2) have the same density and the inner layer has a different density and
- the outer layers (2) comprise a mortar with 55% by weight of powder of pure suberin, 40% of calcium sulfate di-hydrate and 5% of polyvinyl acetate, by weight; and
- the inner layer comprise a mortar with 70% by weight of powder of pure suberin 25% of calcium sulfate di-hydrate and 5% of polyvinyl acetate, by weight.

2. Laminated cardboard panel (1) for the construction of partition walls according to claim 1, **characterized in that** each one of the outer layers (2) has a dimension of one third of the total thickness of the panel.

3. Laminated cardboard panel (1) for the construction of partition walls according to any one of the preceding claims, **characterized in that** the inner layer has a dimension corresponding to one third of the total thickness of the panel.

4. Laminated cardboard panel (1) for the construction of partition walls according to any one of the preceding claims, **characterized in that** the inner layer comprises a metal honeycomb reinforcement frame, inside it and at half-height thereof.

5. Method for the preparation of the laminated cardboard panel (1) of claims 1 to 4, wherein it comprises the following steps:
a) For the outer layers (2), mixing 55% of powder of pure suberin, 40% of calcium sulfate di-hydrate, 5% of polyvinyl acetate in an equal volume of water;
b) Mixing the components of step a) till a homogeneous mixture is obtained;
c) Pouring into a mold, where a cardboard cover that will adhere to the lower outer layer of the panel was previously placed, up to one third of the total thickness of the panel.
d) For the inner layer, mixing 70% of powder of pure suberin, 25% of calcium sulfate di-hydrate, 5% of polyvinyl acetate in an equal volume of water and pouring into the mold over the existing layer, with one third of the total thickness of the panel;
e) Mixing the components of step d) till a homogeneous mixture is obtained;
f) Pouring the third layer with the mixture of step a), also with one third of the total thickness of the panel and placing another cardboard cover on it;
g) Placing the panel in a de-humidifier hot chamber.

6. Method for the preparation of the laminated cardboard panel (1) according to claim 5, **characterized in that** alternatively a metal reinforcement (3) is applied between steps e) and f), which is fixed in the mold by means of clips inserted therein at half-height of the inner layer of the panel, and by subsequently pouring the mixture of step d) involving the reinforcement (3) up to the second third of the total thickness of the panel is reached.

## Patentansprüche

1. Laminierte Kartonplatte (1) für den Bau von Trennwänden, welche mindestens drei nebeneinanderliegende Mörtelschichten umfasst, einschließlich Pulver aus reinem Suberin, worin die äußeren Schichten (2) dieselbe Dichte haben und die innere Schicht eine andere Dichte hat und
- die äußeren Schichten (2) umfassen einen Mörtel mit 55% in Gewichtsprozent Pulver aus reinem Suberin, 40% Calciumsulfat-Dehydrat und 5% Polyvinylacetat in Gewichtsprozent; und
- die innere Schicht umfasst einen Mörtel mit 70% in Gewichtsprozent Pulver aus reinem Suberin, 25% Calciumsulfat-Dehydrat und 5% Polyvinylacetat in Gewichtsprozent.

2. Laminierte Kartonplatte (1) für den Bau von Trennwänden nach Anspruch 1, **dadurch gekennzeichnet, dass** jede der äußeren Schichten (2) eine Größe von einem Drittel der gesamten Dicke der Platte, hat.

3. Laminierte Kartonplatte (1) für den Bau von Trennwänden nach jedem der vorherigen Ansprüche, **dadurch gekennzeichnet, dass** die innere Schicht eine Größe hat, die einem Drittel der gesamten Dicke der Platte, entspricht.

4. Laminierte Kartonplatte (1) für den Bau von Trennwänden nach jedem der vorherigen Ansprüche, **dadurch gekennzeichnet, dass** die innere Schicht einen metallischen Wabenkörper- Verstärkungsrahmen umfasst, im Inneren dieser und auf Halbhöhe davon.

5. Verfahren zur Vorbereitung von der laminierten Kartonplatte (1) von Ansprüchen 1 bis 4, worin es die folgenden Schritte umfasst:
a) Für die äußeren Schichten (2), werden 55% Pulver aus reinem Suberin, 40% Calciumsulfat-Dehydrat, 5% Polyvinylacetat in einem gleichen Volumen Wasser gemischt;
b) Die Komponenten aus Schritt a) werden bis eine homogene Mischung entsteht, gemischt;
c) In eine Form gießen, wo ein Kartonumschlag, der an die untere Außenschicht der Platte haften wird, zuvor platziert wurde, bis zu einem Drittel der gesamten Dicke der Platte;
d) Für die innere Schicht werden 70% Pulver aus reinem Suberin, 25% Calciumsulfat-Dehydrat, 5% Polyvinylacetat in einem gleichen Volumen Wasser gemischt und in die Form über der bestehenden Schicht gegossen, mit einem Drittel der gesamten Dicke der Platte;
e) Die Komponenten aus Schritt d) werden bis eine homogene Mischung entsteht, gemischt;
f) Die dritte Schicht wird mit der Mischung aus Schritt a) gegossen, auch mit einem Drittel der gesamten Dicke der Platte und ein anderer Kartonumschlag wird auf sie platziert;
g) Die Platte wird in eine warme Entfeuchterkammer platziert.

6. Verfahren zur Vorbereitung von der laminierten Kartonplatte (1) nach Anspruch 5, **dadurch gekennzeichnet, dass** abwechselnd eine Metallverstärkung (3) zwischen Schritten e) und f) eingesetzt wird, welche in der Form mittels Klemmen, die dort zu einer Halbhöhe der inneren Schicht der Platte eingefügt werden, fixiert ist, und anschließend wird die Mischung aus Schritt d), welche die Verstärkung (3) einschließt, bis das zweite Drittel der gesamten Dicke der Platte erreicht wird, eingegossen.

## Revendications

1. Panneau en carton laminé (1) pour la construction de cloisons, contenant au moins trois couches adjacentes de mortier, comprenant de la poudre de subérine pure, dans lequel les couches extérieures (2) ont une densité égale, la couche intérieure a une densité différente et
- les couches extérieures (2) comprennent un mortier avec 55% en poids de poudre de subérine pure, 40% de sulfate de calcium di-hydraté et 5% d'acétate de polyvinyle, en poids.

2. Panneau en carton laminé (1) pour la construction de cloisons, selon la revendication 1, **caractérisé par le fait que** chacune des couches extérieures (2) a une dimension égale à un tiers de l'épaisseur totale du panneau.

3. Panneau en carton laminé (1) pour la construction de cloisons, selon quelqu'une des revendications précédentes, **caractérisé par le fait que** la dimension de la couche intérieure est égale à un tiers de l'épaisseur totale du panneau.

4. Panneau en carton laminé (1) pour la construction de cloisons, selon quelqu'une des revendications précédentes, **caractérisé par le fait que** la couche intérieure comprend une structure de renfort métallique alvéolaire dans son noyau et à mi-hauteur de la même.

5. Méthode pour la préparation du panneau de carton laminé (1) des revendications 1 à 4, laquelle comprend les étapes suivantes:
a) Pour les couches extérieures (2), mélanger 55% de poudre de subérine pure, 40% de sulfate de calcium di-hydraté, 5% d'acétate de polyvinyle dans le même volume d'eau;
b) Mélanger les composants de l'étape a) jusqu'à l'obtention d'un mélange homogène;
c) Verser le mélange dans un moule, où on a préalablement placé une couverture en carton qui ira adhérer à la couche extérieure inférieure du panneau, jusqu'à un tiers de l'épaisseur totale du panneau.
d) Pour la couche intérieure, mélanger 70% de poudre de subérine pure, 25% de sulfate de calcium di-hydraté, 5% d'acétate de polyvinyle, dans le même volume d'eau, et verser le mélange sur la couche existante, pour un tiers de l'épaisseur total du panneau;
e) Mélanger les composants de l'étape d) jusqu'à l'obtention d'un mélange homogène;
f) Verser la troisième couche avec le mélange de l'étape a), aussi pour un tiers de l'épaisseur totale du panneau, et placer une autre couverture en carton sur la même;
g) Placer le panneau dans une chambre chaude de déshumidification.

6. Méthode pour la préparation du panneau de carton laminé (1) selon la revendication 5, **caractérisé par le fait que,** alternativement, un renfort en métal (3) est appliqué entre les étapes e) et f), lequel est fixe dans le moule au moyen de crampons qui y sont insérés à mi-hauteur de la couche intérieure du panneau et, en versant ensuite le mélange de l'étape d) qui implique le renfort (3) on atteint jusqu'au deuxième tiers de l'épaisseur totale du panneau.
